Europäisches Patentamt

European Patent Office

Office européen des brevets

(11) Numéro de publication: **0 095 984**
**A1**

# DEMANDE DE BREVET EUROPEEN

(21) Numéro de dépôt: 83401099.3

(22) Date de dépôt: **31.05.83**

(51) Int. Cl.³: **G 03 B 27/46**, G 03 C 5/12

(30) Priorité: 02.06.82 FR 8209608
13.04.83 FR 8306010

(43) Date de publication de la demande: **07.12.83**
**Bulletin 83/49**

(84) Etats contractants désignés: **BE CH DE GB IT LI NL**

(71) Demandeur: **Cibié, Pierre, 145 Avenue du Roule,**
**F-92200 Neuilly sur Seine (FR)**

(72) Inventeur: **Cibié, Pierre, 145 Avenue du Roule,**
**F-92200 Neuilly sur Seine (FR)**

(74) Mandataire: **Jolly, Jean-Pierre et al, Cabinet BROT et**
**JOLLY 83, rue d'Amsterdam, F-75008 Paris (FR)**

(54) **Procédé permettant de compenser les défauts résultant de la projection d'un film à l'aide d'un appareil fonctionnant à une vitesse supérieure à celle de la prise de vues.**

(57) Le procédé selon l'invention consiste à recréer, à partir d'une oeuvre originale, cinématographique et/ou télévisuelle A, B prévue pour passer à une vitesse $N_1$ dans un appareil de projection, une épreuve D pouvant passer à une vitesse $N_2$, $N_2$ étant supérieure à $N_1$, en intercalant entre chacun des couples successifs d'images de l'original $A_1$, $A_2$...$A_n$, au moins une image intercalaire $C_1$, $C_2$...$C_n$ représentant virtuellement, grâce aux propriétés d'intégration des motifs lumineux par l'oeil, une phase transitoire, cette image étant obtenue par superposition des deux images dudit couple.

Ce procédé permet notamment de passer à la télévision des films pris à la fréquence de 16 images par seconde.

## Procédé permettant de compenser les défauts résultant de la projection d'un film à l'aide d'un appareil fonctionnant à une vitesse supérieure à celle de la prise de vues.

La présente invention concerne un procédé permettant de compenser les défauts résultant de la projection d'une oeuvre cinématographique et/ou télévisuelle, à l'aide d'un appareil fonctionnant à une vitesse supérieure à celle de la prise de vues.

D'une manière générale, on sait qu'un film cinématographique est une suite de photos instantanées du mouvement original, rangées par ordre chronologique et prises à une vitesse habituellement de l'ordre de 16 à 25 images/seconde. A la projection, pour obtenir une restitution fidèle de l'oeuvre, l'appareil doit être réglé de telle manière que la vitesse de déroulement du film soit synchrone de celle de la prise de vues.

Bien qu'elle utilise des moyens différents, la télévision adopte un processus similaire. Toutefois, à la différence des films cinématographiques dans lesquels la totalité de chacune des images se trouve instantanément impressionnée ou projetée, en télévision, chacune des images objet instantanées est explorée pixel par pixel, selon un processus de balayage dans lequel le point explorateur se déplace le long de lignes horizontales successives divisant l'image. La fréquence des images instantanées se trouve donc déterminée par le temps d'exploration de chacune de ces images.

La restitution de l'image (projection dans un tube de télévision) s'effectue d'une façon analogue à l'aide d'un récepteur dont le balayage doit se trouver nécessairement synchronisé avec celui de la prise de vues.

Il est clair que pour des raisons techniques, le défilement des images instantanées doit s'effectuer, à l'émission comme à la réception, à une fréquence bien déterminée, qui, à l'heure actuelle, est de 25 images

par seconde.

Il se pose donc un problème important lorsque l'on désire passer à la télévision un film cinématographique pris à une fréquence différente de 25 images par seconde. Tel est notamment le cas des films relativement anciens qui étaient pris à la fréquence de 16 images par seconde. En effet, comme on peut le voir fréquemment à l'heure actuelle, le passage à la télévision de films cinématographiques à 16 images par seconde donne lieu à des vues dans lesquelles les mouvements sont accélérés et saccadés, ce qui rend les sujets bien souvent ridicules, et donne, notamment dans le cas de films documentaires, une impression d'irréel.

L'invention a donc pour but de supprimer ces inconvénients ; elle propose donc un procédé qui permet, non seulement, de rendre les mouvements des sujets plus naturels (transformation des mouvements saccadés en des mouvements continus), mais encore d'améliorer la qualité de l'image initiale.

Pour parvenir à ce résultat, on a déjà proposé de recréer, à partir d'une oeuvre originale prévue pour passer à une vitesse de $N_1$ images/seconde, une épreuve pouvant passer à une vitesse $N_2$ images/seconde, $N_2 > N_1$, en intercalant entre chacun des couples successifs d'images de l'original, au moins une image intermédiaire représentant virtuellement, grâce aux propriétés d'intégration des motifs lumineux par l'oeil, une phase transitoire, cette image étant obtenue par superposition des deux images dudit couple.

Le brevet FR 2 475 245 décrit notamment à ce sujet un procédé dans lequel on obtient l'épreuve définitive par un seul passage du film original à l'intérieur d'un appareil dans lequel des obturateurs synchronisés sont intercalés entre un projecteur du film original et une caméra de tirage. Ces obturateurs servent à découper les temps d'exposition en fractions sensitométriquement et quantitativement additionnées et mélangées, selon un code adapté à chaque type de conversion.

Toutefois, il s'avère que cet appareil est relativement complexe et coûteux, notamment en raison de la multiplicité de ses éléments qui nécessitent une programmation particulière.

L'invention a donc pour but de parvenir à des résultats analogues au moyen d'appareillages beaucoup plus simples.

Elle propose donc à cet effet un procédé selon lequel l'épreuve définitive est réalisée à partir de la superposition de plusieurs tirages intermédiaires ou d'une façon équivalente, par au moins deux impressions partielles successives de l'épreuve obtenues par au moins deux projections successives du film original selon des séquences prédéterminées.

D'une façon plus précise et selon un premier mode d'exécution, le procédé selon l'invention comprend les étapes suivantes :

- la réalisation de deux tirages négatifs A et B du film original,

- la superposition des deux négatifs A et B décalés d'une image,

- la réalisation d'un tirage négatif C à partir de cette superposition en faisant en sorte que la luminance de ce négatif soit égale à celle du négatif A ou du négatif B pris séparément, et

- la réalisation d'un tirage positif D dans lequel les images issues du négatif C se trouvent intercalées entre les images issues du négatif A.

Selon un second mode d'exécution, le procédé selon l'invention comprend les étapes suivantes :

- l'impression de la pellicule sensible d'un film J à l'aide d'un négatif A' du film original, de manière à laisser, entre les images impressionnées $I_1$, $I_3$, $I_5$ ...,

des intervalles $I_2$, $I_4$ ... de largeur égale à celle d'une image, cette impression s'effectuant à une luminance L,

- l'impression des intervalles $I_2$, $I_4$ ... avec les images $A'_1$, $A'_2$, $A'_3$ ... de l'original, à une luminance $\frac{L}{2}$,

- la surimpression des intervalles $I_2$, $I_4$ ... avec les images $A'_1$, $A'_2$, $A'_3$ ... décalées d'une image, cette surimpression s'effectuant à une luminance $\frac{L}{2}$, et

- le développement de la pellicule.

Selon un troisième mode d'exécution, le procédé selon l'invention comprend les étapes suivantes :

- le tirage de deux négatifs A" et B" du film original,

- le tirage d'un négatif E obtenu par superposition de deux films négatifs A" et d'un négatif B" décalé d'une image,

- le tirage d'un négatif F obtenu par superposition de deux négatifs B" et d'un négatif A" décalé d'une image,

- la réalisation d'un film G comprenant, entre les couples d'images originales successives issues d'un négatifs A", les deux images intermédiaires correspondantes fournies à partir des négatifs E et F.

Selon un quatrième mode d'exécution, le procédé selon l'invention comprend les étapes suivantes :

- l'impression de la pellicule sensible d'un film J à l'aide d'un négatif A"' du film original, de manière à laisser, entre les images impressionnées $J_1$, $J_4$, $J_7$ ..., deux longueurs d'image, soit $J_2$, $J_3$, $J_5$, $J_6$ ..., cette impression s'effectuant à une luminance L,

- l'impression des longueurs d'image vierges $J_2$, $J_3$, $J_5$, $J_6$ ... dans l'ordre, avec les images $A"'_1$, $A"'_2$, $A"'_3$ ... de l'original et ce, avec une luminance $\frac{2}{3}$ L,

- la surimpression des longueurs d'image partiellement impressionnées $J_2$, $J_3$, $J_5$, $J_6$ ... dans un ordre inversé, deux par deux, avec les images $A"'_1$, $A"'_2$, $A"'_3$ et ce,

avec une luminance $\frac{1}{3}$ L, et

- le développement de la pellicule.

L'invention a en outre pour objet un procédé faisant plus particulièrement intervenir un appareillage comprenant, d'une part, pour la projection de l'original, un projecteur comportant, de façon classique, une source lumineuse, un condenseur, un passe-film, un obturateur, un diaphragme et un objectif conçu pour émettre dans une chambre de projection étanche à la lumière et, d'autre part, pour l'exposition de l'épreuve, un passe-film, convenablement disposé à l'intérieur de la chambre de projection.

De préférence, les susdits passe-films, l'obturateur et le diaphragme sont pilotés par un système de commande éventuellement programmable, de manière à obtenir automatiquement les séquences de fonctionnement désirées.

A l'aide d'un tel appareillage, le procédé selon l'invention consiste à effectuer, au cours d'un premier passage, une impression partielle de l'épreuve, par une première séquence de projection prédéterminée des images de l'original et, au cours d'un second passage, une surimpression de l'épreuve selon une deuxième séquence différente de la première, de manière à obtenir sur l'épreuve une succession d'images nettes conformes à l'original, entre lesquelles sont intercalées une ou plusieurs images intermédiaires obtenues par la superposition de deux images successives de l'original avec des rapports de luminance ou d'exposition prédéterminés.

Des modes de réalisation de l'invention seront décrits ci-après, à titre d'exemples non limitatifs, avec référence aux dessins annexés dans lesquels :

La figure 1 est une représentation schématique illustrant les différentes étapes du procédé selon l'invention, dans lequel on intercale, entre les images d'un film cinématographique, une image intermédiaire ;

La figure 2 est une représentation schématique illustrant les différentes étapes d'un procédé selon
l'invention permettant d'obtenir un résultat similaire
au précédent ;

La figure 3 est une représentation schématique
illustrant les étapes d'un procédé selon lequel on intercale,
entre les images d'un film, deux images intermédiaires ;

La figure 4 est une représentation schématique
permettant d'illustrer un procédé selon l'invention, selon
lequel on obtient des résultats analogues à ceux
obtenus par le procédé selon la figure 3 ;

La figure 5 est une représentation schématique d'un
appareillage pour la mise en oeuvre d'un autre mode
d'exécution du procédé selon l'invention ;

Les figures 6 et 7 sont des tableaux permettant
d'illustrer les séquences d'images impressionnées sur
l'épreuve à partir de l'original, selon deux modes
d'exécution de l'invention.

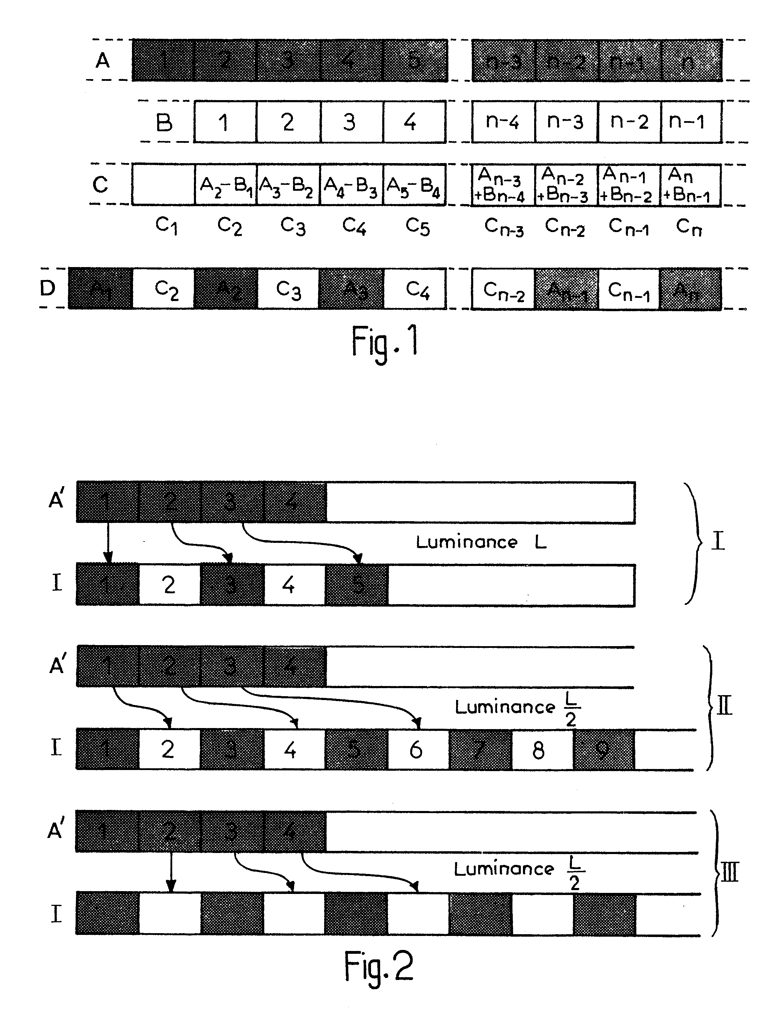

Le procédé illustré figure 1 permet de réaliser un
film utilisable dans un appareil de projection à 25 images
par seconde à partir d'un film original pris à l'aide
d'une caméra à 16 images par seconde.

Le procédé consiste tout d'abord à réaliser deux
tirages négatifs A et B du film original. On superpose
ensuite les deux films en les décalant d'une image puis
on tire un négatif C à partir de cette superposition en
faisant en sorte que la luminance de ce négatif soit
égale à celle du négatif A ou du négatif B pris séparément.

L'image $C_2$ du négatif sera alors égale à la
superposition $A_2 + B_1$ et l'image $C_n$ sera égale à $A_n + B_{n-1}$.

On tire ensuite un positif D dans lequel les images
$C_1 - C_n$ se trouvent intercalées entre les images $A_1 \ldots A_n$
de la façon suivante :

$$A_1 \; C_2 \; A_2 \; C_3 \; \ldots \; A_{n-1} \; C_{n-1} \; A_n.$$

Comme précédemment mentionné, un tel film doit
normalement passer à 32 images/seconde. Toutefois, on constate que si on le passe à 25 images/seconde, on obtient d'excellents résultats, malgré un léger ralenti.

Un résultat analogue peut être également obtenu au moyen du procédé représenté figure 2.

Selon ce procédé, au cours d'une première opération (I), on impressionne la pellicule sensible d'un film I à l'aide d'un négatif A' du film original, de manière à laisser, entre les images impressionnées $I_1$, $I_3$, $I_5$ ..., des intervalles $I_2$, $I_4$ ... de largeur égale à celle d'une image. Le diaphragme de l'appareil utilisé pour cette exposition est alors réglé pour une luminance L.

Au cours d'une seconde opération (II), on impressionne les intervalles $I_2$, $I_4$ ... avec les images $A'_1$, $A'_2$, $A'_3$ ... de l'original avec, cette fois, un diaphragme réglé pour une luminance $\frac{L}{2}$ .

Au cours d'une troisième opération (III), on surimpressionne les intervalles $I_2$, $I_4$ ... avec les images $A'_1$, $A'_2$, $A'_3$ ... avec un décalage d'une image, le diaphragme étant réglé également pour une luminance $\frac{L}{2}$ .

Il suffit ensuite de développer la pellicule pour obtenir le film.

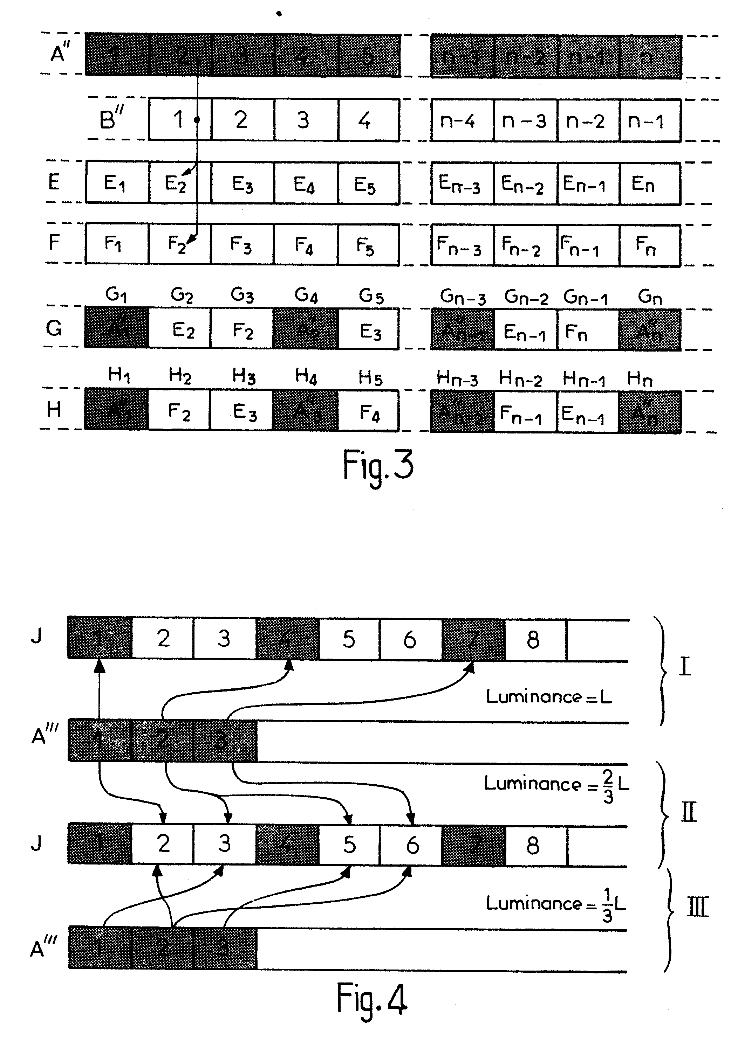

Dans le mode d'exécution illustré figure 3, on réalise, d'une façon analogue à l'exemple précédemment décrit, en regard de la figure 1, deux négatifs A" et B" du film original. A partir de ces deux négatifs, on réalise, par superposition, deux autres négatifs E, F de la façon suivante :

Le tirage E est obtenu par superposition de deux films négatifs A" et d'un négatif B" décalé d'une image.

Le tirage F est obtenu par superposition de deux négatifs B" et d'un négatif A" décalé d'une image.

On réalise ensuite un film G dont les images sont déterminées par la séquence suivante :

$G_1 = A"_1$, $G_2 = E_2$, $G_3 = F_2$, $G_4 = A"_2$ ... $G_{n-3} = A"_{n-1}$, $G_{n-2} = E_n$, $G_{n-1} = F_2$, $G_n = A"_n$ .

On obtient ainsi un film à 48 images/seconde à partir duquel on peut obtenir un film H à 24 images/seconde en supprimant une image sur deux, les images du film H répondant à la séquence suivante :

$$H_1 = A''_1, \quad H_2 = F_2, \quad H_3 = E_3, \quad H_4 = A''_3, \quad H_5 = F_4 \ldots$$
$$H_{n-3} = A''_{n-2}, \quad H_{n-2} = F_{n-1}, \quad H_{n-1} = E_n, \quad H_n = A''_n .$$

Cette solution permet d'obtenir d'excellents résultats. Toutefois, dans le cas où on désire passer le film dans un système de télévision sans supprimer d'image (nette) du film original, il est possible d'utiliser le film E à 48 images et d'utiliser une image par demi-balayage du système de télévision.

Il est clair qu'on pourrait parvenir à un résultat analogue en appliquant un procédé du type de celui décrit à propos de la figure 2.

Ainsi, comme illustré figure 4, au cours d'une première opération (I), on impressionne la pellicule sensible d'un film J à l'aide d'un négatif A"' du film original, de manière à laisser, entre les images impressionnées $J_1$, $J_4$, $J_7$, deux longueurs d'image, soit $J_2$, $J_3$, $J_5$, $J_6$ ... Le diaphragme de l'appareil utilisé pour cette exposition est alors réglé pour une luminance L.

Au cours d'une seconde opération (II), on impressionne les longueurs d'image vierges $J_2$, $J_3$, $J_5$, $J_6$ ... dans l'ordre, avec les images $A'''_1$, $A'''_2$, $A'''_3$ ... de l'original, l'appareil étant alors réglé pour une luminance $\frac{2}{3}$ L.

Au cours d'une troisième opération (III), on surimpressionne les longueurs d'image partiellement impressionnées $J_2$, $J_3$, $J_5$, $J_6$ ... dans un ordre inversé, avec les images $A'''_1$, $A'''_2$, $A'''_3$ ... Ainsi, l'image $J_2$ sera surimpressionnée par l'image $A'''_2$, l'image $J_3$ par l'image $A'''_1$, l'image $J_5$ par l'image $A'''_3$, l'image $J_6$ par l'image $A'''_2$. Pour ces surimpressions, le diaphragme de l'appareil sera réglé pour une luminance $\frac{1}{3}$ L.

On peut alors procéder au développement du film J qui pourra être utilisé comme précédemment décrit.

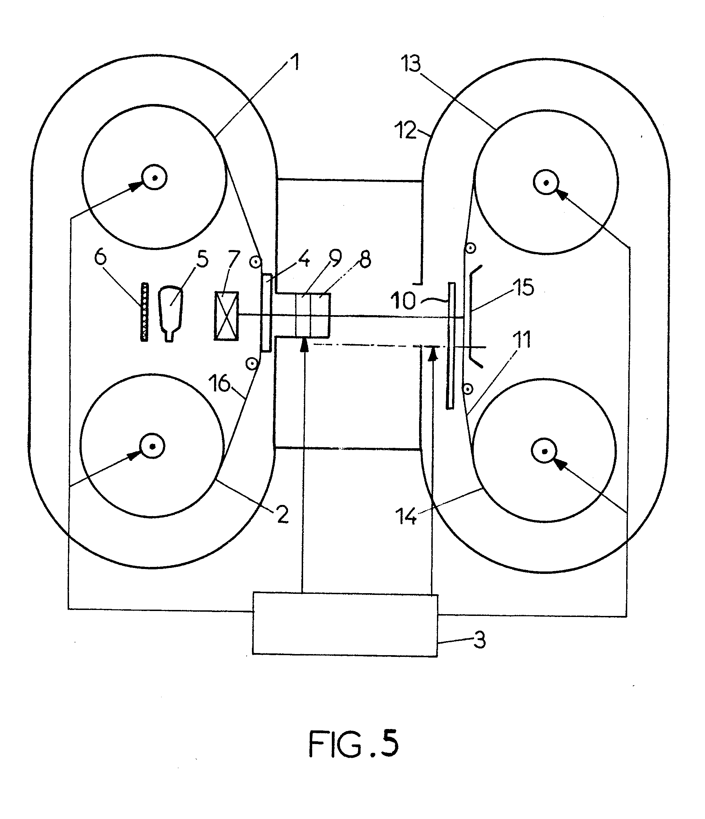

Dans l'exemple représenté figure 5, l'appareillage comprend tout d'abord un organe de projection (partie gauche de la figure 5) qui comporte, de façon classique, un dispositif passe-film faisant intervenir un ensemble bobine débitrice 1-bobine réceptrice 2 actionné à partir d'un moteur éventuellement pas à pas, à vitesse de défilement, image par image, commandable à partir d'un système de commande programmable 3.

D'une bobine 1 à l'autre 2, le film original passe par un guide-film 4 au droit duquel se trouve disposé, d'une côté, un ensemble émetteur de lumière pouvant comprendre une source lumineuse 5, un réflecteur 6 et un condenseur 7. De l'autre côté du guide-film 4 et dans l'axe optique de l'ensemble émetteur de lumière, se trouve disposé un objectif 8 équipé d'un diaphragme 9, piloté par le susdit organe de commande 3.

Cet ensemble de projection est destiné à effectuer la projection des images du film original selon une séquence prédéterminée sur une épreuve sensible 11 montée sur un dispositif passe-film disposé dans une chambre de projection 12 étanche à la lumière extérieure. Ce dispositif passe-film comprend un ensemble bobine débitrice 13-bobine réceptrice 14, actionné à partir d'un moteur éventuellement pas à pas, à vitesse de défilement image par image, commandable également par le système de commande programmable 3. Ce dispositif passe-film comprend en outre un guide-film 15 disposé perpendiculairement à l'axe optique et dans le plan image objet de l'objectif 8, ainsi qu'un obturateur 10 par exemple de type classique, schématisé par un disque rotatif ajouré.

A l'aide d'un tel appareil, la réalisation d'une épreuve pouvant être projetée à la vitesse de 24 images par seconde, à partir d'un film original prévu pour passer à la vitesse de 16 images par seconde, peut s'effectuer comme suit :

On monte tout d'abord, dans le dispositif passe-film de l'organe de projection, le film original 16, puis, dans le dispositif passe-film de la chambre de projection 12, une épreuve sensible vierge 11.

On procède ensuite à une première impression de l'épreuve 11, selon une séquence déterminée des images de l'original et en réglant le diaphragme 9 de manière à obtenir une luminance égale à une fraction déterminée de la luminance totale nécessaire pour l'impression définitive de l'épreuve 11.

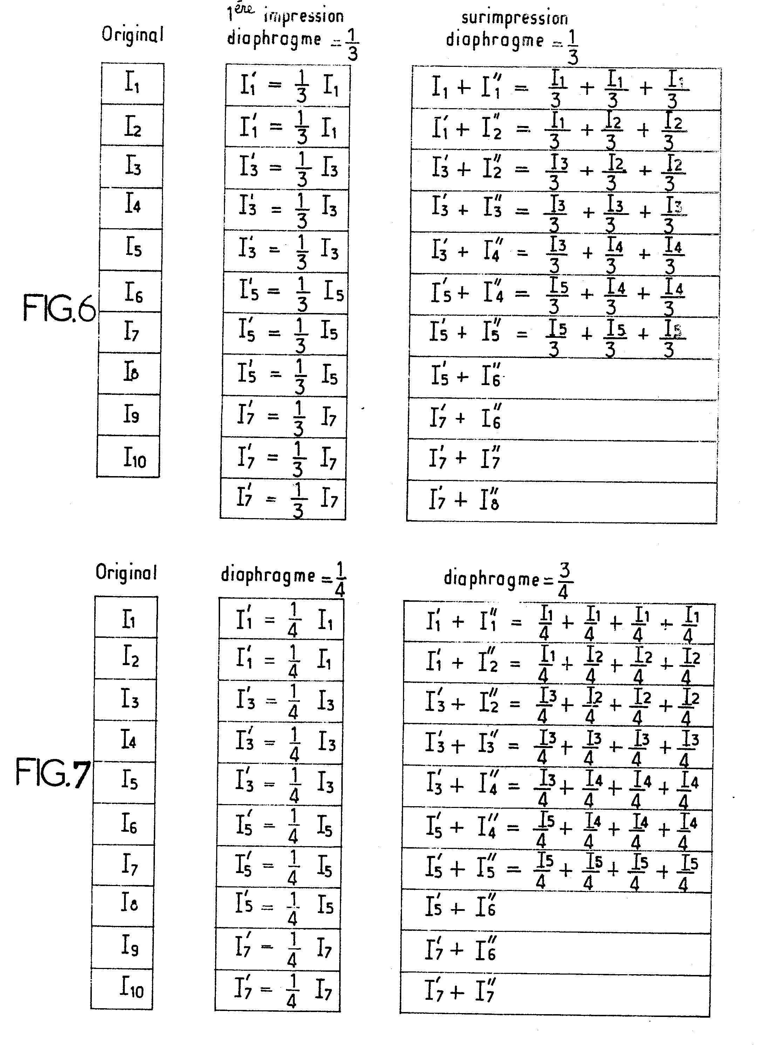

Ainsi, dans l'exemple illustré figure 6, les images de l'original ont été désignées par $I_1$, $I_2$, $I_3$ ... $I_n$. Au cours du premier passage, le diaphragme 9 est réglé de manière à obtenir une luminance égale à $\frac{1}{3}$ de la luminance totale.

Les dispositifs passe-film de l'organe de projection et de la chambre de projection 12 ainsi que l'obturateur 10 sont réglés de manière à obtenir sur l'épreuve vierge la séquence d'images impressionnées suivante : $I'_1$, $I'_1$, $I'_3$, $I'_3$, $I'_3$, $I'_5$, $I'_5$, $I'_5$, $I'_7$, $I'_7$, $I'_7$, dans lesquelles les images $I'_1$, $I'_3$ ... $I'_n$ correspondent aux images $I_1$, $I_3$ ... $I_n$, mais avec une luminance égale à $\frac{1}{3}$ de la luminance totale désirée.

Une fois cette première séquence effectuée, on rembobine les deux films sur leurs bobines débitrices respectives 1, 13 et on procède ensuite à une deuxième séquence d'impression (deuxième passage), en réglant cette fois-ci le diaphragme 9 à une luminance égale à $\frac{2}{3}$ de la luminance totale.

Les dispositifs passe-film de l'organe de projection et de la chambre de projection 12, ainsi que l'obturateur 10 sont réglés de manière à effectuer sur l'épreuve 11 précédemment impressionnée, la séquence d'impression

suivante :

$$I''_1, \; I''_2, \; I''_2, \; I''_3, \; I''_4, \; I''_4, \; I''_5, \; I''_6, \; I''_6 \; ...$$

qui vient se superposer respectivement aux images impressionnées au cours du premier passage $I'_1, \; I'_1, \; I'_3,$ $I'_3, \; I'_3, \; I'_5, \; I'_5, \; I'_5, \; I'_7, \; I'_7 \; ...$ Bien entendu, les images $I''_1, \; I''_2 \; ... \; I''_n$ correspondent aux images $I_1, \; I_2 \; ... \; I_n$ de l'original, mais avec une luminance égale à $\frac{2}{3}$ de la luminance totale désirée.

On obtient donc sur l'épreuve 11, en tenant compte des rapports de luminance, les superpositions d'images suivantes :

$$- \text{1ère image} = \frac{I_1}{3} + \left( \frac{I_1}{3} + \frac{I_1}{3} \right)$$

$$- \text{2ème image} = \frac{I_1}{3} + \left( \frac{I_2}{3} + \frac{I_2}{3} \right)$$

$$- \text{3ème image} = \frac{I_3}{3} + \left( \frac{I_2}{3} + \frac{I_2}{3} \right)$$

$$- \text{4ème image} = \frac{I_3}{3} + \left( \frac{I_3}{3} + \frac{I_3}{3} \right)$$

$$- \text{5ème image} = \frac{I_3}{3} + \left( \frac{I_4}{3} + \frac{I_4}{3} \right)$$

$$- \text{6ème image} = \frac{I_5}{3} + \left( \frac{I_4}{3} + \frac{I_4}{3} \right)$$

Après développement de l'épreuve 11, on obtient un film pouvant passer dans un appareil de projection à la cadence de 24 images par seconde.

Toutefois, il convient de noter que les rapports $\frac{2}{3}$, $\frac{1}{3}$ utilisés pour le réglage du diaphragme 9 conduisent à un léger inconvénient, bien que très peu perceptible.

En effet, on constate que la luminance totale affectée à chaque image de l'original pour impressionner l'épreuve lors des deux passages, varie d'une image à l'autre.

Ainsi, par exemple, l'image $I_3$ de l'original se trouve impressionnée dans l'image 3 de l'épreuve avec une luminance $\frac{1}{3}$, dans l'image 4 de l'épreuve, avec une luminance 1, puis dans l'image 5 de l'épreuve avec une luminance $\frac{1}{3}$ , de sorte que la luminance totale affectée à l'image $I_3$ de l'original sera égale à $\frac{5}{3}$ .

Par contre, l'image $I_4$ de l'original se trouve impressionnée dans les images 4 et 5 de l'épreuve avec chaque fois une luminance de $\frac{2}{3}$ , ce qui conduit à une luminance totale de $\frac{4}{3}$ .

Cette hétérogénéité conduit donc à un léger phénomène de scintillement.

Cet inconvénient peut être facilement éliminé en utilisant un réglage du diaphragme permettant d'obtenir, pour les deux passages, des rapports de luminance respectifs $\frac{1}{4} - \frac{3}{4}$ .

Dans ce cas, comme on peut le constater sur la figure 7, la luminance totale affectée à la projection de chacune des images de l'original sera constante et égale à $\frac{6}{4}$ .

Bien entendu, l'invention ne se limite pas aux deux modes d'exécution précédemment décrits.

Il est clair qu'à l'aide d'un appareillage du type de celui représenté figure 5, il est possible d'utiliser, pour chacun des passages, des séquences d'impression et de surimpression de natures très variées.

0095984

REVENDICATIONS

1.- Procédé permettant de compenser les défauts résultant de la projection cinématographique et/ou télévisuelle, à l'aide d'un appareil fonctionnant à une vitesse $N_2$ supérieure à la vitesse $N_1$ de la prise de vues, ce procédé consistant à recréer, à partir de l'oeuvre originale prévue pour passer à la vitesse $N_1$, une épreuve pouvant passer à la vitesse $N_2$ dans ledit appareil, en intercalant entre chacun des couples successifs d'images de l'original, au moins une image intercalaire représentant virtuellement, grâce aux propriétés d'intégration des motifs lumineux par l'oeil, une phase transitoire, cette image étant obtenue par superposition des deux images dudit couple, caractérisé en ce que l'épreuve définitive est réalisée à partir de la superposition de plusieurs tirages intermédiaires ou, d'une façon équivalente, par au moins deux impressions partielles successives de l'épreuve obtenues par au moins deux projections successives du film original selon des séquences prédéterminées.

2.- Procédé selon la revendication 1, caractérisé en ce que la réalisation de la susdite épreuve comprend les opérations suivantes :

- la réalisation de deux tirages négatifs A et B du film original,

- la superposition des deux négatifs A et B décalés d'une image,

- la réalisation d'un tirage négatif C à partir de cette superposition en faisant en sorte que la luminance de ce négatif soit égale à celle du négatif A ou du négatif B pris séparément, et

- la réalisation d'un tirage positif D dans lequel les images issues du négatif C se trouvent intercalées entre les images issues du négatif A.

3.- Procédé selon la revendication 1, caractérisé en ce que la réalisation de la susdite épreuve comprend les opérations suivantes :

- l'impression de la pellicule sensible d'un film J à l'aide d'un négatif A' du film original, de manière à laisser entre les images impressionnées $I_1$, $I_3$, $I_5$ ... des intervalles $I_2$, $I_4$ ... de largeur égale à celle d'une image, cette impression s'effectuant à une luminance L,

- l'impression des intervalles $I_2$, $I_4$ ... avec les images $A'_1$, $A'_2$, $A'_3$ ... de l'original, à une luminance $\frac{L}{2}$ ,

- la surimpression des intervalles $I_2$, $I_4$ ... avec les images $A'_1$, $A'_2$, $A'_3$ ... décalées d'une image, cette surimpression s'effectuant à une luminance $\frac{L}{2}$, et,

- le développement de la pellicule.

4.- Procédé selon la revendication 1, caractérisé en ce que la réalisation de la susdite épreuve comprend les opérations suivantes :

- le tirage de deux négatifs A" et B" du film original,

- le tirage d'un négatif E obtenu par superposition de deux films négatifs A" et d'un négatif B" décalé d'une image,

- le tirage d'un négatif F obtenu par superposition de deux négatifs B" et d'un négatif A" décalé d'une image,

- la réalisation d'un film G comprenant, entre les couples d'images originales successives issues d'un négatif A", les deux images intermédiaires correspondantes fournies à partir des négatifs E et F.

5.- Procédé selon la revendication 4, caractérisé en ce que l'on supprime en outre une image sur deux du film G obtenu.

6.- Procédé selon la revendication 4, caractérisé en ce que, dans le cas où l'appareil de projection du film définitif est un appareil de télévision à balayage entremêlé, on passe directement le film G obtenu dans l'appareil en utilisant une image dudit film par demi-balayage.

7.- Procédé selon la revendication 1, caractérisé en ce que la réalisation de la susdite épreuve comprend les opérations suivantes :

- l'impression de la pellicule sensible d'un film J à l'aide d'un négatif A"' du film original, de manière à laisser, entre les images impressionnées $J_1$, $J_4$, $J_7$ ..., deux longueurs d'image, soit $J_2$, $J_3$, $J_5$, $J_6$ ..., cette impression s'effectuant à une luminance L,

- l'impression des longueurs d'image vierges $J_2$, $J_3$, $J_5$, $J_6$ ... dans l'ordre, avec les images $A"'_1$, $A"'_2$, $A"'_3$ ... de l'original, et ce, avec une luminance $\frac{2}{3}$ L,

- la surimpression des longueurs d'image partiellement impressionnées $J_2$, $J_3$, $J_5$, $J_6$ ... dans un ordre inversé, deux par deux, avec les images $A"'_1$, $A"'_2$, $A"'_3$, et ce, avec une luminance $\frac{1}{3}$ L, et

- le développement de la pellicule.

8.- Procédé selon la revendication 1 faisant intervenir un appareillage comprenant, d'une part, pour la projection de l'original 16, un projecteur comportant, de façon classique, une source lumineuse 5, un condenseur 7, un passe-film 1, 2, 4, un diaphragme 9 et un objectif 8 conçu pour émettre dans une chambre de projection 12 étanche à la lumière et, d'autre part, pour l'exposition de l'épreuve 11, un passe-film 13, 14, 15 convenablement disposé à l'intérieur de la chambre de projection 12, et un obturateur 10, caractérisé en ce qu'il consiste à effectuer, au cours d'un premier passage, une impression partielle de l'épreuve 11 par une première séquence de projection prédéterminée des images de l'original 16 et, au cours d'un second passage, une surimpression de l'épreuve 11, selon une deuxième séquence différente de la première, de manière à obtenir, sur l'épreuve 11 définitive, une succession d'images conformes à l'original 16, entre lesquelles sont intercalées une ou plusieurs images intermédiaires obtenues par la superposition de deux images successives de l'original 16, avec des rapports de luminance ou d'exposition prédéterminés.

9.- Procédé selon la revendication 8, caractérisé en ce que les susdits passe-films 1, 2, 4 et 13, 14, 15, l'obturateur 10 et le diaphragme 9 sont pilotés par un système de commande 3 éventuellement programmable, de manière à obtenir automatiquement les séquences de fonctionnement désirées.

10.- Procédé selon la revendication 8, caractérisé en ce que, en désignant les images successives de l'original 16 par $I_1$, $I_2$, $I_3$ ... $I_n$, la séquence d'images impressionnées sur l'épreuve 11 au premier passage est de la forme $I'_1$, $I'_1$, $I'_3$, $I'_3$, $I'_3$, $I'_5$, $I'_5$, $I'_5$, $I'_7$, $I'_7$, $I'_7$, dans laquelle les images $I'_1$, $I'_2$ ... $I'_n$ sont projetées sur l'épreuve 11 à partir des images $I_1$, $I_2$ ... $I_n$, mais avec une luminance égale à une fraction de la luminance totale désirée, et la séquence d'images surimpressionnées sur l'épreuve 11 au second passage est de la forme :

$I''_1$, $I''_2$, $I''_2$, $I''_3$, $I''_4$, $I''_4$, $I''_5$, $I''_6$, $I''_6$ ...
dans laquelle les images $I''_1$, $I''_2$ ... $I''_n$ sont projetées sur l'épreuve 11 à partir des images $I_1$, $I_2$ ... $I_n$ de l'original, mais avec une luminance égale à une fraction complémentaire de la luminance totale désirée.

11.- Procédé selon la revendication 10, caractérisé en ce que la susdite fraction de luminance utilisée lors du premier passage est égale à $\frac{1}{3}$ de la luminance totale désirée, tandis qu'au deuxième passage, cette fraction de luminance est égale à $\frac{2}{3}$ .

12.- Procédé selon la revendication 10, caractérisé en ce que la susdite fraction de luminance utilisée au premier passage est égale à $\frac{1}{4}$ de la luminance totale désirée, tandis qu'au deuxième passage, cette fraction de luminance est égale à $\frac{3}{4}$ .

Fig.1

Fig.2

Fig.3

Fig.4

0095984

FIG.5

**FIG.6**

| Original | 1ère impression diaphragme $= \frac{1}{3}$ | surimpression diaphragme $= \frac{1}{3}$ |
|---|---|---|
| $I_1$ | $I'_1 = \frac{1}{3} I_1$ | $I_1 + I''_1 = \frac{I_1}{3} + \frac{I_1}{3} + \frac{I_1}{3}$ |
| $I_2$ | $I'_1 = \frac{1}{3} I_1$ | $I'_1 + I''_2 = \frac{I_1}{3} + \frac{I_2}{3} + \frac{I_2}{3}$ |
| $I_3$ | $I'_3 = \frac{1}{3} I_3$ | $I'_3 + I''_2 = \frac{I_3}{3} + \frac{I_2}{3} + \frac{I_2}{3}$ |
| $I_4$ | $I'_3 = \frac{1}{3} I_3$ | $I'_3 + I''_3 = \frac{I_3}{3} + \frac{I_3}{3} + \frac{I_3}{3}$ |
| $I_5$ | $I'_3 = \frac{1}{3} I_3$ | $I'_3 + I''_4 = \frac{I_3}{3} + \frac{I_4}{3} + \frac{I_4}{3}$ |
| $I_6$ | $I'_5 = \frac{1}{3} I_5$ | $I'_5 + I''_4 = \frac{I_5}{3} + \frac{I_4}{3} + \frac{I_4}{3}$ |
| $I_7$ | $I'_5 = \frac{1}{3} I_5$ | $I'_5 + I''_5 = \frac{I_5}{3} + \frac{I_5}{3} + \frac{I_5}{3}$ |
| $I_8$ | $I'_5 = \frac{1}{3} I_5$ | $I'_5 + I''_6$ |
| $I_9$ | $I'_7 = \frac{1}{3} I_7$ | $I'_7 + I''_6$ |
| $I_{10}$ | $I'_7 = \frac{1}{3} I_7$ | $I'_7 + I''_7$ |
| | $I'_7 = \frac{1}{3} I_7$ | $I'_7 + I''_8$ |

**FIG.7**

| Original | diaphragme $= \frac{1}{4}$ | diaphragme $= \frac{3}{4}$ |
|---|---|---|
| $I_1$ | $I'_1 = \frac{1}{4} I_1$ | $I'_1 + I''_1 = \frac{I_1}{4} + \frac{I_1}{4} + \frac{I_1}{4} + \frac{I_1}{4}$ |
| $I_2$ | $I'_1 = \frac{1}{4} I_1$ | $I'_1 + I''_2 = \frac{I_1}{4} + \frac{I_2}{4} + \frac{I_2}{4} + \frac{I_2}{4}$ |
| $I_3$ | $I'_3 = \frac{1}{4} I_3$ | $I'_3 + I''_2 = \frac{I_3}{4} + \frac{I_2}{4} + \frac{I_2}{4} + \frac{I_2}{4}$ |
| $I_4$ | $I'_3 = \frac{1}{4} I_3$ | $I'_3 + I''_3 = \frac{I_3}{4} + \frac{I_3}{4} + \frac{I_3}{4} + \frac{I_3}{4}$ |
| $I_5$ | $I'_3 = \frac{1}{4} I_3$ | $I'_3 + I''_4 = \frac{I_3}{4} + \frac{I_4}{4} + \frac{I_4}{4} + \frac{I_4}{4}$ |
| $I_6$ | $I'_5 = \frac{1}{4} I_5$ | $I'_5 + I''_4 = \frac{I_5}{4} + \frac{I_4}{4} + \frac{I_4}{4} + \frac{I_4}{4}$ |
| $I_7$ | $I'_5 = \frac{1}{4} I_5$ | $I'_5 + I''_5 = \frac{I_5}{4} + \frac{I_5}{4} + \frac{I_5}{4} + \frac{I_5}{4}$ |
| $I_8$ | $I'_5 = \frac{1}{4} I_5$ | $I'_5 + I''_6$ |
| $I_9$ | $I'_7 = \frac{1}{4} I_7$ | $I'_7 + I''_6$ |
| $I_{10}$ | $I'_7 = \frac{1}{4} I_7$ | $I'_7 + I''_7$ |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 475 245 (YGOUF) <br> * En entier * | 1 | G 03 B 27/46 <br> G 03 C 5/12 |
| | --- | | |
| A | US-A-2 011 353 (CAPSTAFF) <br> * Page 1, lignes 29-43 * | 1 | |
| | --- | | |
| A | GB-A- 631 095 (THE GENERAL ELECTRIC COMP.) <br> * Revendication 1 * | 6 | |
| | ----- | | |

**DOMAINES TECHNIQUES RECHERCHES (Int. Cl. ³)**

G 03 B 27/46
G 03 C 5/12

Le présent rapport de recherche a été établi pour toutes les revendications

| Lieu de la recherche <br> LA HAYE | Date d'achèvement de la recherche <br> 07-09-1983 | Examinateur <br> MEES G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82